# EUROPEAN PATENT SPECIFICATION

(11) **EP 2 745 418 B1**
(45) Date of publication and mention of the grant of the patent: **09.10.2019**
(21) Application number: 12781150.3
(22) Date of filing: 13.08.2012
(51) Int. Cl.: H04B 5/00, H02J 50/05

(54) **CAPACITIVE WIRELESS POWER INSIDE A TUBE-SHAPED STRUCTURE**
KAPAZITIVE DRAHTLOSE ENERGIE IM INNERN EINER RÖHRENFÖRMIGEN STRUKTUR
ÉNERGIE CAPACITIVE SANS FIL À L'INTÉRIEUR D'UNE STRUCTURE TUBULAIRE

(30) Priority: 16.08.2011 US 201161523919 P; 10.04.2012 US 201261622103 P
(43) Date of publication of application: 25.06.2014
(73) Proprietor: Signify Holding B.V., 5656 AE Eindhoven (NL)
(72) Inventor: VAN GOOR, Dave Willem, NL-5656 AE Eindhoven (NL); SEMPEL, Adrianus, NL-5656 AE Eindhoven (NL); VAN DER ZANDEN, Henricus Theodorus, NL-5656 AE Eindhoven (NL); WAFFENSCHMIDT, Eberhard, NL-5656 AE Eindhoven (NL)
(74) Representative: van Eeuwijk, Alexander Henricus Waltherus
(86) International application number: PCT/IB2012/054112
(87) International publication number: WO 2013/024420

(56) References cited:
- EP-A1- 1 997 238
- DE-U1- 29 580 172
- US-A- 2 414 719
- US-A- 5 892 411
- US-A1- 2005 285 706
- US-A1- 2010 087 143
- US-A1- 2011 101 788

## Description

US 2010/087143 A1 discloses a method and system for wirelessly transferring data and power via capacitive coupling. In some embodiments, a plurality of first electrodes is configured to wirelessly transfer power and data signals through an insulating layer to a plurality of second electrodes with capacitive coupling. In some embodiments, the insulating layer comprises at least a dielectric film.

US 5 892 411 A discloses a data transmission device having a first module and a second module moveable relative to one another. One of the modules functions as a sending module and the other functions as a receiving module for transmitting data between first and second modules. One of the modules is an electrical line with a defined surge impedance and the other module is a coupling probe for coupling contact-free with the electrical line. A first sending and receiving electronic circuit is connected to the first module. A second sending and receiving electronic circuit is connected to the second module.

The invention generally relates to capacitive powering systems for wireless power transfers, and more particularly to structures for allowing efficient power transfers in a tube-shaped structure.

A wireless power transfer refers to the supply of electrical power without any wires or contacts, thus the powering of electronic devices is performed through a wireless medium. One popular application for contactless powering is for the charging of portable electronic devices, e.g., mobiles phones, laptop computers, and the like.

One implementation for wireless power transfers is by an inductive powering system. In such a system, the electromagnetic inductance between a power source (transmitter) and the device (receiver) allows for contactless power transfers. Both the transmitter and receiver are fitted with electrical coils, and when brought into physical proximity, an electrical signal flows from the transmitter to the receiver.

In inductive powering systems, the generated magnetic field is concentrated within the coils. As a result, the power transfer to the receiver pick-up field is very concentrated in space. This phenomenon creates hot-spots in the system which limits the efficiency of the system. To improve the efficiency of the power transfer, a high quality factor for each coil is needed. To this end, the coil should be characterized with an optimal ratio of an inductance to resistance, be composed of materials with low resistance, and fabricated using a Litze-wire process to reduce skin-effect. Moreover, the coils should be designed to meet complicated geometries to avoid Eddy-currents. Therefore, expensive coils are required for efficient inductive powering systems. A design for a contactless power transfer system for large areas would necessitate many expensive coils, thus for such applications an inductive powering system may not be feasible.

Capacitive coupling is another technique for transferring power wirelessly. This technique is predominantly utilized in data transfer and sensing applications. A car-radio antenna glued on the window with a pick-up element inside the car is an example of a capacitive coupling. The capacitive coupling technique is also utilized for contactless charging of electronic devices. For such applications, the charging unit (implementing the capacitive coupling) operates at frequencies outside the inherent resonance frequency of the device.

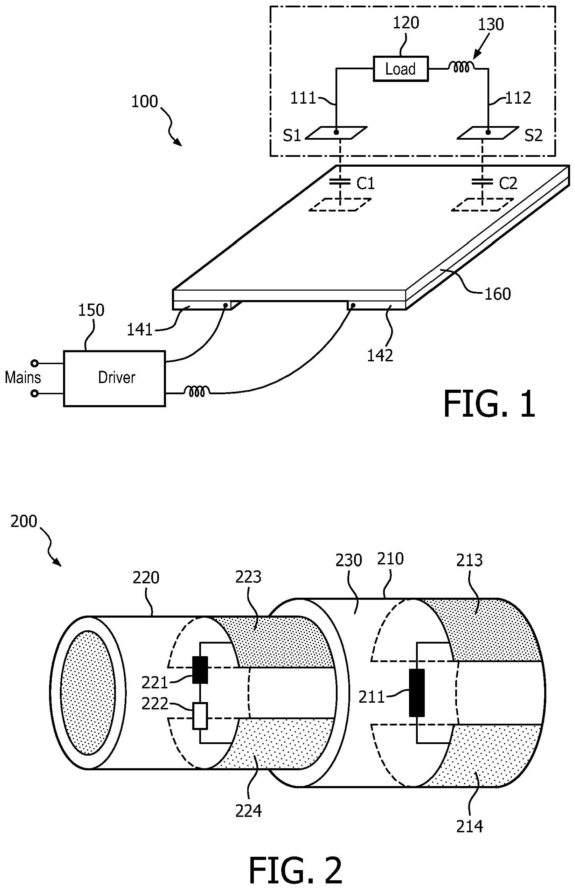

A capacitive power transfer system can also be utilized to transfer power over large areas, e.g., windows, walls, having a flat structure and so on. An example for such a captive power transfer system 100 is depicted in Fig. 1. As illustrated in Fig. 1, a typical arrangement of such a system includes a pair of receiver electrodes 111, 112 connected to a load 120 and an inductor 130. The system 100 also includes a pair of transmitter electrodes 141, 142 connected to a power driver 150, and an insulating layer 160.

The transmitter electrodes 141, 142 are coupled to one side of the insulating layer 160 and the receiver electrodes 111, 112 are coupled from the other side of the insulating layer 160. This arrangement forms capacitive impedance between the pair of transmitter electrodes 141, 142 and the receiver electrodes 111, 112. Therefore, a power signal generated by the power driver can be wirelessly transferred from the transmitter electrodes 141, 142 to the receiver electrodes 111, 112 to power the load 120, when a frequency of the power signal matches a series-resonance frequency of the system. The load may be, for example, a LED, a LED string, a lamp, and the like. As an example, the system 100 can be utilized to power lighting fixtures installed on a wall.

Capacitive power transfer may be designed to transfer power over a large area; such a system was primarily designed to support flat surfaces and structures, e.g., walls, windows, etc. Thus, the system 100 is limited in the applications that it can support. For example, the system 100 cannot optimally allow wireless power transfer along pipes which may be very long (e.g., hundreds of kilometers) or a garden hose. That is, the capacitive power system 100 is not optimally designed to allow wireless power transfer over tube-shaped structures.

In the related art, the power distribution across a tube is typically achieved using conductive wires that are integrated inside the tube-shaped structure (e.g., a pipe). A conductive connection is made with the conductive wires to enable a power transfer from a power source to a load. However, cracks in the tube may cause the wires to break or change the conductive capacity, thus they cannot conduct power. In addition, for applications that require power transmission along a long pipe the solution is costly as the wires may run across the entire length of the tube.

Therefore, it would be advantageous to provide a solution for efficient wireless power transfers in a large area in a tube-shaped structure.

The invention is set out in the appended set of claims. Any reference to embodiments herein which do not fall within the scope of the appended claims should be construed as serving merely for facilitating the understanding of this disclosure.

Certain embodiments disclosed herein include a capacitive powering system constructed to enable wireless power transfers inside a tube-shaped structure. The system includes a capacitive tube including a pair of receiver electrodes connected to a load through a first inductor, wherein the first inductor is coupled to the load to resonate the system; a transmitter device clipped onto the capacitive tube, the transmitter device includes a pair of transmitter electrodes connected to a power driver; and an insulating layer for electrically insulating the capacitive tube from the transmitter device to form a capacitive impedance between the pair of transmitter electrodes and the pair of receiver electrodes, wherein a power signal generated by the power driver is wirelessly transferred from the pair of transmitter electrodes to the pair of receiver electrodes to power the load when a frequency of the power signal substantially matches a series-resonance frequency of the first inductor and the capacitive impedance.

Certain embodiments disclosed herein also include a capacitive powering system constructed to enable wireless power transfers inside a tube-shaped structure. The system includes a receiver device including a pair of receiver electrodes connected to a load through an inductor, wherein the first inductor is coupled to the load to resonate the system; a capacitive tube including a pair of transmitter electrodes connected to a power driver, wherein the receiver device is clipped onto the capacitive tube; and an insulating layer to electrically insulate the capacitive tube from the receiver device for forming a capacitive impedance between the pair of transmitter electrodes and the pair of receiver electrodes, wherein a power signal generated by the power driver is wirelessly transferred from the pair of transmitter electrodes to the pair of receiver electrodes to power the load when a frequency of the power signal substantially matches a series-resonance frequency of the inductor and the capacitive impedance.

Certain embodiments disclosed herein also include a coupling tube for wireless coupling electric energy from a first section of a capacitive tube to a second section of the capacitive tube. The coupling tube a pair of conductive electrodes placed inside the coupling tube and covered by an insulating material, the coupling tube has a tube-shaped structure with an opening wider than a diameter of the capacitive tube, when the pair of conductive electrodes are placed in proximity over electrodes of the capacitive tube, capacitive impedance is created that at a series-resonance frequency allows wireless electric energy coupling between the first section and the second section of the capacitive tube, wherein the first section and the second section are detached sections of the capacitive tube.

The subject matter that is regarded as the invention is particularly pointed out and distinctly claimed in the claims at the conclusion of the specification. The foregoing and other features and advantages of the invention will be apparent from the following detailed description taken in conjunction with the accompanying drawings.
Figure 1 is a typical arrangement of a capacitive power system for wireless power transfers over a flat structure.
Figure 2 is a schematic diagram of a capacitive powering system constructed to enable wireless power transfers inside a tube-shaped structure according to an embodiment of the invention.
Figure 3 is an exploded perspective view of the capacitive tube according to another embodiment of the invention.
Figure 4 is a diagram of a transmitter device that can be clipped into the capacitive tube.
Figure 5 is another arrangement of a capacitive powering system constructed to enable wireless power transfers inside a tube-shaped structure according to one embodiment.
Figure 6 is a diagram of a receiver device that can be clipped into the capacitive tube.
Figure 7 is a diagram of a coupling tube constructed in accordance with an embodiment of the invention.

It is important to note that the embodiments disclosed are only examples of the many advantageous uses of the innovative teachings herein. In general, statements made in the specification of the present application do not necessarily limit any of the various claimed inventions. Moreover, some statements may apply to some inventive features but not to others. In general, unless otherwise indicated, singular elements may be in plural and vice versa with no loss of generality. In the drawings, like numerals refer to like parts through several views.

Fig. 2 shows a schematic diagram of a capacitive powering system 200 constructed to enable wireless power transfers inside a tube-shaped structure according to an embodiment of the invention. The system 200 is designed to wirelessly transfer power from a transmitter device 210 to a capacitive tube 220. The device 210 may be clipped into any point along the capacitive tube 220. The tube 220 may be a hose (e.g., a garden hose, a vacuum cleaner hose, etc.), a pipe used to carry water, oil, gas, etc., and the like.

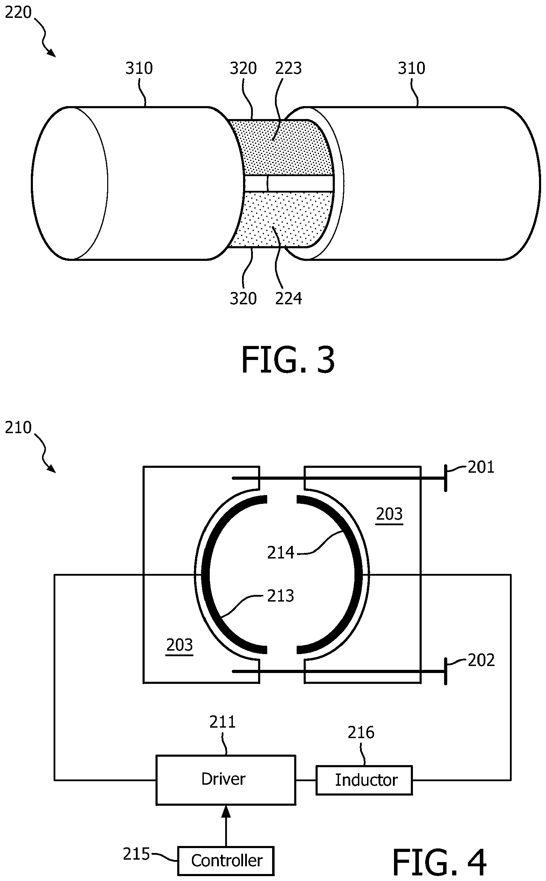

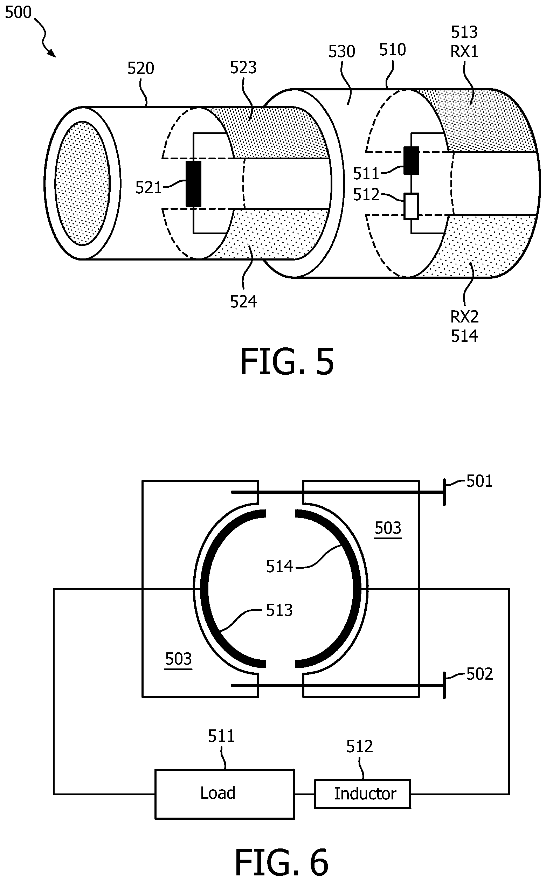

According to one embodiment, the capacitive tube 220 includes a load 221, which may be clipped into the capacitive tube 220 from the outside, while the device 210 is connected to a power driver 211. An arrangement of such a transmitter device 210 is shown in Fig. 4. In another embodiment, the capacitive tube 220 is connected to a power driver, while the device 210 includes the load to be powered. An exemplary diagram of such an arrangement is provided in the Fig. 5. It should be noted that in any of these arrangements, there is no physical electrical connection between the load and the power device, but rather the electric power is wirelessly transferred between the device 210 and capacitive tube 220.

In the embodiment illustrated in Fig. 2, the device 210 also includes a pair of transmitter electrodes (TX1, TX2) 213 and 214 being coupled to the driver 211. The connection between the transmitter electrodes 213, 214 and the driver 211 may be by means of a galvanic contact or a capacitive in-coupling. The device 210 may be clip onto the capacitive tube 220, attached by screws (Fig. 4), integrally constructed together with capacitive tube 220, or other means of bringing the transmitter electrodes in wireless contact with the receiver electrodes.

The transmitter electrodes 213, 214 are attached on an insulating layer 230. The insulating layer 230 is a thin layer substrate material that can be of any insulating material, including for example, air, paper, wood, textile, glass, DI-water, and so on. In an embodiment, a material with dielectric permittivity is selected. The thickness of the insulating layer 230 is typically between 10 microns (e.g., a paint layer) and a few millimeters (e.g., a glass layer).

The capacitive tube 220, acting as a receiver, in the embodiment illustrated in the Fig. 2 also includes an inductor 222 connected in series to the load 221 and a pair of receiver electrodes (RX1, RX2) 223, 224. The load 221 may be a lighting element, a sensor, a controller, a water pump, a valve, and the like.

The receiver electrodes (RX1, RX2) 223, 224 are placed inside the capacitive tube 220 and are covered with an insulating material. This structure is further illustrated in Fig. 3 which shows an exploded perspective view of the capacitive tube 220. The outer material 310 is electrically insulating material while the inner material 320 is a connective matter forming the receiver electrodes 223, 224.

The conductive material of each of the receiver electrodes 223, 224 may be, for example, carbon, aluminum, indium tin oxide (ITO), organic material, such as PEDOT, copper, silver, conducting paint, or any conductive material. Each of pair of transmitter electrodes 213, 214 can be of the same conductive material as the receiver electrodes, or made of different conductive material. In one embodiment, each of the receiver and transmitter electrodes is formed as a thin sheet of aluminum glue to the inside wall of the tube.

Referring back to Fig. 2, a power is supplied to the load 221 by placing the transmitter electrodes 213 and 214 in proximity to receiver electrodes 223, 224 without having a direct contact between the two. As a result, a capacitive impedance is formed between the transmitter electrodes 213, 214 and receiver electrodes 223, 224 connected to the load 221. The capacitive impedance has the properties of capacitors connected to each of the receiver electrodes.

The driver 211 generates an AC signal of which amplitude, frequency, and waveform can be controlled. To allow the system to properly operate, the driver 211 outputs an AC power signal having a frequency as the series-resonance frequency of a circuit consisting of a series of capacitors (equivalent to the capacitive impedance) and the inductor 222. The impedances of such capacitors and the inductor cancel each other out at the resonance frequency, resulting in a low-ohmic circuit.

The amplitude of the AC power signal is the amplitude required to power the load 211. The power level of an AC power signal transferred to the load 211 can be changed by controlling the frequency, phase, or duty cycle of the signal output by the driver 211, thereby causing the signal to be different from the series-resonance frequency of the system. The maximum power transmission in the capacitive powering system 200 is achieved when the frequency of the AC signal is close to the series-resonance derived from the impedance values of the inductor 222 and capacitive impedance formed between the electrodes.

In one embodiment, the tube 220 may include multiple loads each being connected to a different pair of receiver electrodes and resonating at the same or a different series-resonance frequency. In this configuration, each load of the multiple of loads is powered by a power signal generated by the driver 211 and wirelessly transferred through the pair of transmitter electrodes in the device 210. According to an embodiment, the device 210 can control the functionally of the load 221. To this end, the driver 211 generates a control signal that is modulated on the AC power signal or detunes the frequency of the AC power signal from the series-resonance frequency of the system. For example, if the load 221 is a LED, then a control signal output by the driver 211 may be utilized for dimming or color setting of the LED. As another example, if the load 221 is a water valve, the control to the valve can be modulated on the AC power signal to control the opening of the valve. The control signal may be generated by a controller, a microprocessor, or any electronic circuit that can be configured to control or program the various functions of the load 221.

Fig. 4 shows an exemplary and non-limiting diagram of a transmitter device 210 constructed according to one embodiment of the invention. The transmitter device 210 serves as a transmitter in the capacitive powering system 200. According to this embodiment, the device 210 can be clipped onto the capacitive tube 220 and fastened using screws 201 and 202. The transmitter device 210 includes the driver 211 connected to the transmitter electrodes 213, 214 that may be formed using any of the conductive materials mentioned above. The dimensions and conductive materials of the transmitter electrodes 213, 214 are determined based on the application of the device 210. The outer surface of each of the transmitter electrodes 213, 214 are coupled to an insulating layer 203 that can be formed using of any of the insulating materials mentioned above. In an embodiment, the insulating layer 203 of the device 210 can serve as the insulating layer 230 of the system 200.

In an optional embodiment, the driver 211 is connected to an inductor 216 that can be utilized to adjust the series-resonance frequency the system 200. In this embodiment, the series-resonance frequency is determined by the inductors 216, 222 and the capacitive impedance. In another optional embodiment, the driver 210 may be connected to a controller 215 connected to the driver 211. The controller 215 may be utilized to generate a control signal for programming and controlling the functionality of the load 221 as discussed above.

Fig. 5 illustrates another arrangement of a capacitive powering system 500 constructed to enable wireless power transfers inside a tube-shaped structure according to one embodiment. In this arrangement, the device 510 acts as the receiver and the capacitive tube 520 acts as the transmitter.

Specifically, the capacitive tube 520 includes a power driver 521, which may be clipped onto the capacitive tube 520 from the outside. The capacitive tube 520 also includes a pair of transmitter (TX1, TX2) electrodes 523, 524. The connection between the transmitter electrodes 523, 524 and the driver 521 may be by means of a galvanic contact or a capacitive in-coupling. In one embodiment, the transmitter electrodes 523, 524 are formed inside of the tube as illustrated in Fig. 3.

The receiver device 510 includes a load 511 and an inductor 512 connected to a pair of receiver electrodes (RX1, RX2) 513 and 514. The receiver electrodes 513, 514 are attached on an insulating layer 530. The insulating layer 530 is a thin layer of substrate material that can be of any insulating material that may be formed using any of the materials mentioned above. The load 511 may be a lighting element, a sensor, a controller, a water pump, a valve, and the like. The receiver electrodes 513 and 514 and transmitter electrodes 523, 524 may be formed using any of the conducting materials mentioned above. In one embodiment, each of the receiver and transmitter electrodes is formed as a thin sheet of aluminum.

In the arrangement illustrated in Fig. 5, the power is supplied to the load 511 from the driver 521 by placing the transmitter electrodes 523 and 524 in proximity to the receiver electrodes 513, 514 without having a direct contact between the two, i.e., the electrodes are separated by an insulating layer 530. As a result, the capacitive impedance is formed between the transmitter and receiver electrodes. The receiver driver 521 generates an AC signal of which amplitude, frequency, and waveform can be controlled. To allow the system to properly operate the driver 521 outputs an AC power signal having a frequency as the series-resonance frequency of a circuit consisting of a series of capacitors (equivalent to the capacitive impedance) and the inductor 222. The impedances of such capacitors and the inductor cancel each other out at the resonance frequency, resulting in a low-ohmic circuit. The amplitude of the AC power signal is the amplitude required to power the load 521 and its frequency is the same as the series-resonance frequency of a circuit consisting of a series of capacitors (equivalent to the capacitive impedance) and the inductor 512. Also, in this arrangement, a control signal can be modulated on the AC power signal to control or program the functionality of the load 521.

Fig. 6 shows an exemplary and non-limiting diagram of a receiver device 510 of the capacitive powering system 500 according to one embodiment of the invention. The receiver device 510 can be clipped onto the capacitive tube 520 and fastened using screws 501 and 502. The device 510 includes a pair of receiver electrodes 513 and 514 connected to the load 511 and an inductor 512. The dimensions and conductive materials of the receiver electrodes are determined based on the application of the device 210. The outer surface each of the receiver electrodes 513, 514 are coupled to an insulating layer 503 that can be formed using of any of the insulating materials mentioned above. In an embodiment, the insulating layer 503 of the receiver device 510 can serve as the insulating layer 530 of the system 500.

The receivers and transmitter devices have been described above as each having a pair of electrodes. However, it should be noted that each of the receiver and transmitter devices can include any number of electrodes greater than 2.

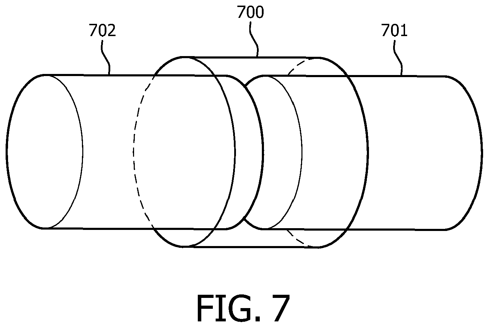

Fig. 7 depicts a coupling tube 700 constructed in accordance with an embodiment of the invention. The coupling tube 700 couples electric energy from one section 701 of a capacitive tube to a detached section 702 of the capacitive tube. In accordance with another embodiment, the coupling tube 700 may also couple electric energy from an inlet to the capacitive tube. The capacitive tube may be any of the capacitive tubes 220 and 520 described in detail above. That is, the capacitive tube includes a pair of electrodes.

In one embodiment, the coupling tube 700 is constructed to include a pair of conductive electrodes placed inside of the coupling tube and covered by an insulating material. For example, the conductive electrodes are formed as shown in Fig. 3. The opening of the coupling tube 700 is wider than the opening of the capacitive tube.

The coupling tube 700 also includes a pair of electrodes that when placed in proximity over the electrodes in the capacitive tube creates capacitive impedance that at the resonance frequency results in a low-ohmic circuit. Thus, electric energy can be wirelessly transferred from the electrodes of the capacitive tube at section 701 to the electrodes at section 702 through the electrodes of the coupling tube 700. The transmitter electrodes 510 and 520 may be formed using any of the conductive materials mentioned above. In an embodiment of the invention, the connection between the coupling tube 700 and sections 701 and 702 can be a galvanic contact.

The various embodiments described herein can be utilized in numerous partial applications. For example, a garden hose can be equipped with a clip-on light device that includes a LED. In this example, the garden hose is the capacitive tube having a power driver and the LED is the load clipped onto the hose. In another example, the clip-on device has a LED can be also placed on a vacuum cleaner hose that includes the power driver to light the vacuum cleaner foot.

Yet in another example, the capacitive power system discussed herein can be implemented in a greenhouse water pipe that includes several water valves. The power and control needed to operate the valves can be wirelessly provided to the valves using the capacitive tube. The driver (that may be connected to a controller) is connected in the driver in the water inlet and at the end of the pipe a clip- on device that controls the operation of the tube. As another example, a capacitive tube can be used that includes a central heating, ventilating and air conditioning (HVAC) sensor (i.e., a load) utilized in a HVAC system. For example, each room could be equipped with such a tube allowing the resident to control the temperature in the room based on the reading of the sensor.

Certain embodiments of the invention can be implemented as hardware, firmware, software or any combination thereof. Moreover, the software is preferably implemented as an application program tangibly embodied on a program storage unit, a non-transitory computer readable medium, or a non-transitory machine-readable storage medium that can be in a form of a digital circuit, an analogy circuit, a magnetic medium, or combination thereof. The application program may be uploaded to, and executed by, a machine comprising any suitable architecture. Preferably, the machine is implemented on a computer platform having hardware such as one or more central processing units ("CPUs"), a memory, and input/output interfaces. The computer platform may also include an operating system and microinstruction code. The various processes and functions described herein may be either part of the microinstruction code or part of the application program, or any combination thereof, which may be executed by a CPU, whether or not such computer or processor is explicitly shown. In addition, various other peripheral units may be connected to the computer platform such as an additional data storage unit and a printing unit.

While the present invention has been described at some length and with some particularity with respect to the several described embodiments, it is not intended that it should be limited to any such particulars or embodiments or any particular embodiment, but it is to be construed with references to the appended claims so as to provide the broadest possible interpretation of such claims in view of the prior art and, therefore, to effectively encompass the intended scope of the invention.

## Claims

1. A capacitive powering system constructed to enable wireless power transfers inside a tube-shaped structure (200), comprising:
a capacitive tube (220) including a pair of receiver electrodes (223, 224) connected to a load (221) through a first inductor (222)and the first inductor is coupled to the load to resonate the system;
a transmitter device (210) including a pair of transmitter electrodes (213, 214) connected to a power driver (211), wherein the transmitter device (210) is clipped onto the capacitive tube (220); and
an insulating layer (230) constructed to cover the receiver electrodes and to electrically insulate the capacitive tube from the transmitter device to form a capacitive impedance between the pair of transmitter electrodes and the pair of receiver electrodes, wherein a power signal generated by the power driver is wirelessly transferred from the pair of transmitter electrodes to the pair of receiver electrodes to power the load when a frequency of the power signal substantially matches a series-resonance frequency of the first inductor and the capacitive impedance.

2. The system of claim 1, wherein the pair of receiver electrodes are made of conductive material and placed inside the capacitive tube and are covered with an insulating material.

3. The system of clam 2, wherein the each of the receiver electrodes is formed as a thin sheet of aluminum glue to an inside wall of the capacitive tube.

4. The system of claim 2, wherein the the insulating material that covers the receiver electrodes forms in part the insulating layer.

5. The system of claim 1, wherein the transmitter electrodes are made of conductive material covered by an insulating material that forms in part the insulating layer.

6. The system of claim 1, wherein the load is at least any one of: a lamp, a light emitting diode (LED) string, and a LED lamp, a heating ventilating and air conditioning (HVAC) sensor, a water pump, and a valve.

7. The system of claim 1, wherein the transmitter device is further configured to control an operation of the load, and wherein the control of the operation is performed by at least one of detuning a frequency of the power signal from the series-resonance frequency and modulating a control signal on the power signal.

8. The system of claim 7, wherein the transmitter device further includes:
a second inductor (216) connected in series to one of the pair of electrodes for adjusting the series-resonance frequency;
a controller (215) connected to the power driver (211) that generates a control signal for at least controlling the functionality of the load, wherein the power drive is connected to the pair of transmitter electrodes through the second inductor by means of at least one of a galvanic contact and a capacitive in-coupling.

9. A capacitive powering system constructed to enable wireless power transfers inside a tube-shaped structure (500), comprising:
a receiver device (510) including a pair of receiver electrodes (513, 514) connected to a load (511) through a first inductor (512) and the first inductor is coupled to the load to resonate the system;
a capacitive tube (520) including a pair of transmitter electrodes (523, 524) connected to a power driver (521), wherein the receiver device (510) is clipped onto the capacitive tube (520); and
an insulating layer (530)) constructed to cover the transmitter electrodes and to electrically insulate the capacitive tube from the receiver device for forming a capacitive impedance between the pair of transmitter electrodes and the pair of receiver electrodes, wherein a power signal generated by the power driver is wirelessly transferred from the pair of transmitter electrodes to the pair of receiver electrodes to power the load when a frequency of the power signal substantially matches a series-resonance frequency of the inductor and the capacitive impedance.

10. The system of claim 9, wherein the pair of transmitter electrodes are made of conductive material, placed inside the capacitive tube and are covered with an insulating material, wherein the insulating material that covers the transmitter electrodes forms in part the insulating layer.

11. The system of clam 10, wherein each of the transmitter electrodes is formed as a thin sheet of aluminum glue to an inside wall of the capacitive tube.

12. The system of claim 9, wherein the receiver electrodes are covered by an insulating material that forms in part the insulating layer.

13. The system of claim 9, wherein the power driver is further configured to control an operation of the load, wherein the control of the operation is performed by at least one of: detuning from the series-resonance frequency and modulating a control signal on the power signal.

14. A coupling tube (700) for wireless coupling electric energy from a first section (701) of a capacitive tube to a second section (702) of the capacitive tube, wherein the first section comprising a pair of transmitter electrodes (213, 214; 523, 524) connected to a power driver (211, 521); and wherein the second section comprising a pair of receiver electrodes (223,224;513,514) connected to a load (211,521) through an inductor (222,512); wherein the coupling tube (700) comprises:
a pair of conductive electrodes placed inside the coupling tube and covered by an insulating material, the coupling tube has a tube-shaped structure with an opening wider than a diameter of the capacitive tube, the pair of conductive electrodes being arranged in proximity to electrodes of the capacitive tube to create capacitive impedance allowing a series-resonance frequency wireless electric energy coupling between the first section and the second section of the capacitive tube, wherein the first section and the second section are detached sections of the capacitive tube.

15. The system of claim 14, wherein one of the first and second sections is an inlet of the capacitive tube.

## Patentansprüche

1. Kapazitives Energiesystem, welches konstruiert ist, um drahtlose Energieübertragung innerhalb einer röhrenförmigen Struktur (200) zu ermöglichen, umfassend:
eine kapazitive Röhre (220), welche ein Paar von Empfängerelektroden (223, 224) beinhaltet, welche mit einer Last (221) über eine erste Induktivität (222) verbunden sind, und wobei die erste Induktivität mit der Last gekoppelt ist, um das System mitschwingen zu lassen;
eine Sendevorrichtung (210), welche ein Paar von Sendeelektroden (213, 214) beinhaltet, welche mit einem Leistungstreiber (211) verbunden sind, wobei die Sendevorrichtung (210) auf die kapazitive Röhre (220) geklippt ist; und
eine Isolierschicht (230), welche konstruiert ist, die Empfängerelektroden abzudecken und die kapazitive Röhre von der Sendevorrichtung elektrisch zu isolieren, um eine kapazitive Impedanz zwischen dem Paar von Sendeelektroden und dem Paar von Empfängerelektroden zu bilden, wobei ein Leistungssignal, welches von dem Leistungstreiber erzeugt wird, drahtlos von dem Paar von Sendeelektroden zu dem Paar von Empfängerelektroden übertragen wird, um die Last zu speisen, wenn eine Frequenz des Leistungssignals im Wesentlichen mit einer Serienresonanzfrequenz der ersten Induktivität und der kapazitiven Impedanz übereinstimmt.

2. System nach Anspruch 1, wobei das Paar von Empfängerelektroden aus leitendem Material hergestellt und innerhalb der kapazitiven Röhre platziert ist und mit einem Isoliermaterial bedeckt ist.

3. System nach Anspruch 2, wobei die jeweilige von den Empfängerelektroden als ein dünnes Blatt Aluminiumklebstoff an einer Innenwand der kapazitiven Röhre gebildet ist.

4. System nach Anspruch 2, wobei das Isoliermaterial, welches die Empfängerelektroden bedeckt, teilweise die Isolierschicht bildet.

5. System nach Anspruch 1, wobei die Sendeelektroden aus leitendem Material hergestellt sind, welches durch ein Isoliermaterial bedeckt ist, welches teilweise die Isolierschicht bildet.

6. System nach Anspruch 1, wobei die Last zumindest eines der folgenden ist:
eine Lampe, ein Leuchtdiodenstrang (LED), und eine LED-Lampe, ein Heizlüfter- und Klimaanlagensensor (HVAC), eine Wasserpumpe, und ein Ventil.

7. System nach Anspruch 1, wobei die Sendevorrichtung weiter konfiguriert ist, einen Betrieb der Last zu steuern, und wobei die Steuerung des Betriebs durch zumindest eines von Verstimmen einer Frequenz des Leistungssignals aus der Serienresonanzfrequenz und Modulieren eines Steuersignals auf dem Leistungssignal durchgeführt wird.

8. System nach Anspruch 7, wobei die Sendevorrichtung weiter umfasst:
eine zweite Induktivität (216), welche in Serie mit einer aus dem Paar von Elektroden verbunden ist, um die Serienresonanzfrequenz anzupassen.
eine Steuerung (215), welche mit dem Leistungstreiber (211) verbunden ist, welcher ein Steuersignal zumindest zum Steuern der Funktionalität der Last erzeugt, wobei der Leistungsantrieb mit dem Paar von Sendeelektroden durch die zweite Induktivität mithilfe von zumindest einem von einem galvanischen Kontakt und einer kapazitiven Einkopplung verbunden ist.

9. Kapazitives Energiesystem, welches konstruiert ist, um drahtlose Energieübertragung innerhalb einer röhrenförmigen Struktur (500) zu ermöglichen, umfassend:
eine Empfängervorrichtung (510), welche ein Paar von Empfängerelektroden (513, 514) beinhaltet, welche mit einer Last (511) über eine erste Induktivität (512) verbunden sind, und wobei die erste Induktivität mit der Last gekoppelt ist, um das System mitschwingen zu lassen;
eine kapazitive Röhre (520), welche ein Paar von Sendeelektroden (523, 524) beinhaltet, welche mit einem Leistungstreiber (521) verbunden sind, wobei die Empfängervorrichtung (510) auf die kapazitive Röhre (520) geklippt ist; und
eine Isolierschicht (530)), welche konstruiert ist, die Sendeelektroden abzudecken und die kapazitive Röhre von der Empfängervorrichtung zum Bilden einer kapazitiven Impedanz zwischen dem Paar von Sendeelektrode und dem Paar von Empfängerelektroden elektrisch zu isolieren, wobei ein Leistungssignal, welches von dem Leistungstreiber erzeugt wird, drahtlos von dem Paar von Sendeelektroden zu dem Paar von Empfängerelektroden übertragen wird, um die Last zu speisen, wenn eine Frequenz des Leistungssignals im Wesentlichen mit einer Serienresonanzfrequenz der Induktivität und der kapazitiven Impedanz übereinstimmt.

10. System nach Anspruch 9, wobei das Paar von Sendeelektroden aus leitendem Material hergestellt, innerhalb der kapazitiven Röhre platziert ist und mit einem Isoliermaterial bedeckt ist, wobei das Isoliermaterial, welches die Sendeelektroden bedeckt, teilweise die Isolierschicht bildet.

11. System nach Anspruch 10, wobei jede von den Sendeelektroden als ein dünnes Blatt Aluminiumklebstoff an einer Innenwand der kapazitiven Röhre gebildet ist.

12. System nach Anspruch 9, wobei die Empfängerelektroden durch ein Isoliermaterial bedeckt sind, welches teilweise die Isolierschicht bildet,

13. System nach Anspruch 9, wobei der Leistungstreiber weiter konfiguriert ist, einen Betrieb der Last zu steuern, wobei die Steuerung des Betriebs durch zumindest eines von Verstimmen aus der Serienresonanzfrequenz und Modulieren eines Steuersignals auf dem Leistungssignal durchgeführt wird.

14. Kopplungsrohr (700) zum drahtlosen Koppeln von elektrischer Energie aus einem ersten Abschnitt(701) einer kapazitiven Röhre mit einem zweiten Abschnitt (702) der kapazitiven Röhre, wobei der erste Abschnitt ein Paar von Sendeelektroden (213, 214; 523, 524) umfasst, welche mit einem Leistungstreiber (211, 521) verbunden sind; und
wobei der zweite Abschnitt ein Paar von Empfängerelektroden (223, 224; 513, 514) umfasst, welche mit einer Last (211, 521) durch eine Induktivität (222, 512) verbunden sind;
wobei das Kopplungsrohr (700) umfasst:
ein Paar von leitenden Elektroden, welche innerhalb des Kopplungsrohrs platziert und durch ein Isoliermaterial bedeckt sind, wobei das Kopplungsrohr eine röhrenförmige Struktur mit einer Öffnung aufweist, welche breiter als ein Durchmesser der kapazitiven Röhre ist, wobei das Paar von leitenden Elektroden in der Nähe von Elektroden der kapazitiven Röhre angeordnet ist, um kapazitive Impedanz zu erzeugen, welche eine drahtlose elektrische Energiekopplung von Serienresonanzfrequenz zwischen dem ersten Abschnitt und dem zweiten Abschnitt der kapazitiven Röhre ermöglicht, wobei der erste Abschnitt und der zweite Abschnitt abgetrennte Abschnitt der kapazitiven Röhre sind.

15. System nach Anspruch 14, wobei einer von dem ersten und zweiten Abschnitten ein Einlass der kapazitiven Röhre ist.

## Revendications

1. Système d'alimentation capacitive conçu pour permettre des transferts d'énergie sans fil à l'intérieur d'une structure de forme tubulaire (200), comprenant :
un tube capacitif (220) incluant une paire d'électrodes réceptrices (223, 224) connectées à une charge (221) via un premier inducteur (222), lequel premier inducteur est couplé à la charge pour faire résonner le système ;
un dispositif de transmission (210) incluant une paire d'électrodes émettrices (213, 214) connectées à une commande d'énergie (211), dans lequel le dispositif de transmission (210) est connecté sur le tube capacitif (220) ; et
une couche isolante (230) conçue pour recouvrir les électrodes réceptrices et pour isoler électriquement le tube capacitif du dispositif de transmission afin de former une impédance capacitive entre la paire d'électrodes émettrices et la paire d'électrodes réceptrices, dans lequel un signal d'alimentation généré par la commande d'énergie est transféré sans fil de la paire d'électrodes émettrices à la paire d'électrodes réceptrices pour alimenter la charge lorsqu'une fréquence du signal d'alimentation concorde sensiblement avec une fréquence de résonance sérielle du premier inducteur et de l'impédance capacitive.

2. Système selon la revendication 1, dans lequel la paire d'électrodes réceptrices est constituée d'un matériau conducteur et placée à l'intérieur du tube capacitif et n'est pas recouverte d'un matériau isolant.

3. Système selon la revendication 2, dans lequel chacune des électrodes réceptrices se présente sous la forme d'une mince feuille de colle aluminium sur une paroi interne du tube capacitif.

4. Système selon la revendication 2, dans lequel le matériau isolant qui recouvre les électrodes réceptrices forme en partie la couche isolante.

5. Système selon la revendication 1, dans lequel les électrodes émettrices sont constituées d'un matériau conducteur recouvert d'un matériau isolant qui forme en partie la couche isolante.

6. Système selon la revendication 1, dans lequel la charge est au moins l'une quelconque des suivantes : une lampe, une chaîne de diodes électroluminescentes (DEL) et une lampe DEL, un capteur de chauffage, de ventilation et de conditionnement d'air (HVAC), une pompe à eau et une vanne.

7. Système selon la revendication 1, dans lequel le dispositif émetteur est en outre configuré pour commander une opération de la charge et dans lequel la commande de l'opération est effectuée par au moins l'un(e) d'un désaccord d'une fréquence du signal d'alimentation vis-à-vis de la fréquence de résonance sérielle et d'une modulation d'un signal de commande sur le signal d'alimentation.

8. Système selon la revendication 7, dans lequel le dispositif émetteur comprend en outre :
un second inducteur (216) connecté en série à l'une de la paire d'électrodes pour ajuster la fréquence de résonance sérielle ;
un dispositif de commande (215) connecté à la commande d'énergie (211) qui génère un signal de commande pour au moins commander la fonctionnalité de la charge, dans lequel la commande d'énergie est connectée à la paire d'électrodes émettrices via le second inducteur au moyen d'au moins l'un d'un contact galvanique et d'un couplage capacitif.

9. Système d'alimentation capacitif conçu pour permettre des transferts d'énergie sans fil à l'intérieur d'une structure de forme tubulaire (500), comprenant :
un dispositif récepteur (510) incluant une paire d'électrodes réceptrices (513, 514) connectées à une charge (511) via un premier inducteur (512), lequel premier inducteur est couplé à la charge pour faire résonner le système ;
un tube capacitif (520) comprenant une paire d'électrodes émettrices (523, 524) connectées une commande d'énergie (521), dans lequel le dispositif récepteur (510) est connecté sur le tube capacitif (520) ; et
une couche isolante (530) conçue pour recouvrir les électrodes émettrices et isoler électriquement le tube capacitif du dispositif de transmission afin de former une impédance capacitive entre la paire d'électrodes émettrices et la paire d'électrodes réceptrices, dans lequel un signal d'alimentation généré par la commande d'énergie est transféré sans fil de la paire d'électrodes émettrices à la paire d'électrodes réceptrices afin d'alimenter la charge lorsqu'une fréquence du signal d'alimentation concorde sensiblement avec une fréquence de résonance sérielle de l'inducteur et de l'impédance capacitive.

10. Système selon la revendication 9, dans lequel la paire d'électrodes émettrices est constituée d'un matériau conducteur placé à l'intérieur du tube capacitif et sont revêtues d'un matériau isolant, dans lequel le matériau isolant qui recouvre les électrodes émettrices forme en partie la couche isolante.

11. Système selon la revendication 10, dans lequel chacune des électrodes émettrices est formée d'une mince feuille de colle aluminium à une paroi interne du tube capacitif.

12. Système selon la revendication 9, dans lequel les électrodes réceptrices sont revêtues d'un matériau isolant qui forme en partie la couche isolante.

13. Système selon la revendication 9, dans lequel la commande d'énergie est en outre configurée pour commander une opération de la charge, dans lequel la commande de l'opération est effectuée par au moins l'un(e) d'un désaccord avec la fréquence de résonance sérielle et d'une modulation d'un signal de commande sur le signal d'alimentation.

14. Tube de couplage (700) pour coupler sans fil une énergie électrique d'une première section (701) d'un tube capacitif à une seconde section (702) du tube capacitif, dans lequel la première section comprend une paire d'électrodes
émettrices (213, 214 ; 523, 524) connectées à la commande d'énergie (211, 521) et dans lequel la seconde section comprend une paire d'électrodes réceptrices (223, 224 ; 513, 514) connectées à une charge (211, 521) via un inducteur (222, 512) ; dans lequel le tube de couplage (700) comprend :
une paire d'électrodes conductrices placées à l'intérieur du tube de couplage et revêtues d'un matériau isolant, le tube de couplage a une structure de forme tubulaire avec une ouverture plus large qu'un diamètre du tube capacitif, la paire d'électrodes conductrices étant agencée à proximité d'électrodes du tube capacitif pour créer une impédance capacitive permettant un couplage d'énergie électrique sans fil de fréquence de résonance sérielle entre la première section et la seconde section du tube capacitif, dans lequel la première section et la seconde section sont des sections détachées du tube capacitif.

15. Système selon la revendication 14, dans lequel l'une des première et seconde sections est une entrée du tube capacitif.
